# EUROPÄISCHE PATENTANMELDUNG

(11) **EP 4 181 357 A1**
(43) Veröffentlichungstag der Anmeldung: **17.05.2023**
(21) Anmeldenummer: 21208429.7
(22) Anmeldetag: 16.11.2021
(51) Int. Cl.: H02K 3/487

(54) **VERFAHREN ZUR HERSTELLUNG EINES STATORS FÜR EINE ELEKTRISCHE ROTIERENDE MASCHINE, STATOR, ELEKTRISCHE ROTIERENDE MASCHINE UND FAHRZEUG**

(71) Anmelder: Valeo eAutomotive Germany GmbH, 91056 Erlangen (DE)
(72) Erfinder: DENZINGER, Stefan, 97616 Bad Neustadt a.d.Saale (DE)
(74) Vertreter: Valeo Powertrain Systems

(57) **Zusammenfassung**

Stator (1) für eine elektrische Maschine (101), aufweisend
- einen Statorkern (2), welcher eine Längsachse (3), eine Stirnseite (4), eine der Stirnseite (4) gegenüberliegende weitere Stirnseite (5) und eine Nut (6) aufweist, die sich von der Stirnseite (4) zur weiteren Stirnseite (5) erstreckt und in Radialrichtung einen Rand (17) aufweist,
- eine Wicklungsanordnung (11) mit einem Innenabschnitt (12), der innerhalb der Nut (6) angeordnet ist, und
- einen Nutabschluss (18), der innerhalb der Nut (6) zwischen dem Innenabschnitt (12) und dem Rand (17) angeordnet und adhäsiv am Innenabschnitt (12) befestigt ist.

## Beschreibung

Die vorliegende Erfindung betrifft einen Stator für eine elektrische Maschine, aufweisend einen Statorkern, welcher eine Längsachse, eine Stirnseite, eine der Stirnseite gegenüberliegende weitere Stirnseite und eine Nut aufweist, die sich von der Stirnseite zur weiteren Stirnseite erstreckt und in Radialrichtung einen Rand aufweist, eine Wicklungsanordnung mit einem Innenabschnitt, der innerhalb der Nut angeordnet, und einen Nutabschluss, der innerhalb der Nut zwischen dem Innenabschnitt und dem Rand angeordnet ist.

Daneben betrifft die Erfindung ein Verfahren zur Herstellung eines Stators für eine elektrische Maschine, eine elektrische Maschine und ein Fahrzeug.

Statoren mit einem Statorkern, einer innerhalb des Statorkerns angeordneten Wicklungsanordnung und einem Nutabschluss sind allgemein bekannt. Der Nutabschluss dient insbesondere dazu, die Wicklungsanordnung entlang des Innenabschnitts korrekt in der Nut positionieren. Dabei soll ein Verdrehen des Innenabschnitts innerhalb der Nut vermieden und der Innenabschnitt möglichst nah an einem Joch des Statorkerns positioniert werden. Es ist bekannt, einen derartigen Nutabschluss durch einen Nutkeil, beispielsweise aus einem Glasfasermaterial, auszubilden und in die Nut zu schieben.

Der Erfindung liegt die Aufgabe zugrunde, eine vereinfachte Möglichkeit zum Abschließen einer Nut eines Statorkerns anzugeben.

Diese Aufgabe wird erfindungsgemäß bei einem Stator der eingangs genannten Art dadurch gelöst, dass der Nutabschluss adhäsiv am Innenabschnitt befestigt ist.

Der erfindungsgemäße Stator für eine elektrische Maschine weist ein Statorkern auf. Der Statorkern weist eine Längsachse auf. Der Statorkern weist ferner eine Stirnseite auf. Der Statorkern weist ferner eine weitere Stirnseite auf. Die weitere Stirnseite liegt der Stirnseite gegenüber. Der Statorkern weist ferner eine Nut auf. Die Nut erstreckt sich von der Stirnseite zur weiteren Stirnseite. Die Nut weist in Radialrichtung einen Rand auf. Der Stator weist ferner eine Wicklungsanordnung auf. Die Wicklungsanordnung hat einen Innenabschnitt. Der Innenabschnitt ist innerhalb der Nut angeordnet. Der Stator weist ferner einen Nutabschluss auf. Der Nutabschluss ist innerhalb der Nut zwischen dem Innenabschnitt und dem Rand angeordnet. Der Nutabschluss ist adhäsiv am Innenabschnitt befestigt.

Durch die erfindungsgemäß vorgesehene adhäsive Befestigung des Nutabschlusses am Innenabschnitt kann eine Relativposition des Nutabschlusses bezüglich des Innenabschnitts fixiert werden, sodass der Nutabschluss seine Position innerhalb der Nut behält und auf aufwändige Befestigungsmechanismen, beispielsweise Rastmechanismen, in der Nut verzichtet werden kann. Darüber hinaus ist es möglich, dass der Nutabschluss bereits vor einem Einführen der Wicklungsanordnung in die Nut am Innenabschnitt befestigt wird und so ein separates Einführen des Nutabschlusses in die Nut als Fertigungsschritt entfallen kann. Dies vereinfacht den Fertigungsprozess.

Der Statorkern kann weitere Nuten aufweisen, die sich jeweils von der Stirnseite zur weiteren Stirnseite erstrecken und in Radialrichtung einen Rand aufweisen. Die Wicklungsanordnung kann weitere Innenabschnitte aufweisen, die jeweils innerhalb einer der weiteren Nuten angeordnet sind. Für jeden weiteren Innenabschnitt kann ein weiterer Nutabschluss vorgesehen sein, der innerhalb der weiteren Nut zwischen dem weiteren Innenabschnitt und dem Rand angeordnet ist und adhäsiv am weiteren Innenabschnitt befestigt ist.

Der Statorkern kann aus einer Vielzahl von in axialer Richtung geschichteten und/oder gegeneinander isolierten Einzelblechen ausgebildet sein. Der Statorkern kann insoweit auch als Statorblechpaket bezeichnet oder erachtet werden. Der Statorkern kann ferner ein Joch aufweisen, welches die Nut an ihrer dem Rand radial gegenüberliegenden Seite begrenzt. Der Statorkern kann einen Aufnahmebereich für einen Rotor der elektrischen Maschine begrenzen. Der Rand kann dem Aufnahmebereich zugewandt sein. Vorzugsweise bildet der Statorkern eine radial äußere Begrenzung des Aufnahmebereichs aus. Der Statorkern kann mehrere Zähne aufweisen. Zwischen einem Paar der Zähne kann die oder eine jeweilige Nut ausgebildet sein. Die Zähne können eine die Nut mit dem Aufnahmebereich verbindende Nutöffnung ausbilden. Der Nutabschluss kann die Nutöffnungen verschließen.

Der Nutabschluss ist bevorzugt mittels eines Klebstoffs am Innenabschnitt befestigt.

In bevorzugter Ausgestaltung des erfindungsgemäßen Stators weist der Nutabschluss einen Trägerstreifen mit einer ersten Seite, die zum Innenabschnitt weist und auf der eine adhäsive Schicht angeordnet ist, und einer zum Rand weisenden zweiten Seite auf. Durch den Trägerstreifen wird insbesondere ein nicht vom Innenabschnitt eingenommener Raum innerhalb der Nut ausgefüllt, sodass ein weiterer Innenabschnitt am Joch anliegt. Der den Trägerstreifen aufweisende Nutabschluss ist einfacher und günstiger als ein herkömmlicher Nutkeil herstellbar. Der Trägerstreifen ist außerdem weniger beschädigungsanfällig als ein herkömmlicher, aus einem festen und unflexiblen Material, wie einem Glasfasermaterial, ausgebildeter Nutkeil.

Bevorzugt ist der Trägerstreifen derart elastisch ausgebildet, dass er im in der Nut angeordneten Zustand eine vom Rand in Richtung des Joch wirkende Rückstellkraft auf den Innenabschnitt ausübt.

Der Trägerstreifen kann durch eine Folie oder einen, insbesondere elastischen, Schaum ausgebildet sein. Ein Material des Trägerstreifens kann einen Kunststoff und/oder ein Papier und/oder ein Metall und/oder ein textiles Gewebe umfassen. Besonders bevorzugt ist der Kunststoff Polytetrafluoräthylen (PTFE). Der Trägerstreifen kann eine Dicke zwischen 0,1 und 1,0 mm, insbesondere zwischen 0,3 und 0,7 mm, aufweisen.

Der Nutabschluss kann außerdem einen weiteren Trägerstreifen aufweisen, wobei die Trägerstreifen zueinander radialgeschichtet angeordnet und adhäsiv aneinander befestigt sein können. So lassen sich auch größere Radialabstände zwischen dem Rand und dem Innenabschnitt durch den Nutabschluss ausfüllen. Selbstverständlich können auch mehrere weitere Trägerstreifen vorgesehen sein.

Vorzugsweise weist der Nutabschluss auf seiner dem Rand zugewandten Seite eine die Gleitreibung des Trägerstreifens gegenüber dem Statorkern reduzierende Oberflächenschicht auf. Dadurch kann ein Einführen des Nutabschlusses in die Nut vereinfacht werden, da die Oberflächenschicht leicht am Statorkern entlanggleiten kann. Außerdem kann eine Beschädigung des Trägerstreifens und/oder des Innenabschnitts vermieden werden.

Die Wicklungsanordnung des erfindungsgemäßen Stators kann elektrisch leitfähige Leiterelemente aufweisen. Die Leiterelemente können sich innerhalb des Innenabschnitts von der Stirnseite zur weiteren Stirnseite durch die Nut erstrecken. Die Leiterelemente sind vorzugsweise aus Kupfer gebildet. Vorzugsweise sind die Leiterelemente gegeneinander elektrisch isoliert. Die Leiterelemente können separate Strompfade der Wicklungsanordnung ausbilden. Die Leiterelemente können insbesondere als Formleiter, sogenannte U- oder I-Pins ausgebildet sein.

Die Wicklungsanordnung kann ferner eine elektrische isolierende Nutauskleidung aufweisen. Besonders bevorzugt erstreckt sich die Nutauskleidung der Nut von der Stirnseite zur weiteren Stirnseite und hüllt innerhalb des Innenabschnitts die Leiterelemente ein. Die Nutauskleidung erstreckt sich insbesondere um eine parallel zur Längsachse liegende, entlang der Leiterelemente verlaufenden Achse. Typischerweise hüllt die Nutauskleidung die Leiterelemente derart ein, dass diese innerhalb des Innenabschnitts vollständig gegenüber dem Statorkern elektrisch isoliert sind. Die Nutauskleidung kann aus einem Isolationspapier, das insbesondere mehrfach und/oder sich überlappend gefaltet ist, gebildet sein.

Besonders bevorzugt ist der Nutabschluss unmittelbar adhäsiv an der Nutauskleidung befestigt. Eine solche Befestigung ist einfach herstellbar und kann die Nutauskleidung bei einem Einführen der Wicklungsanordnung in die Nut vor Beschädigungen schützen.

In bevorzugter Ausgestaltung bilden die Leiterelemente eine Haarnadelwicklung aus. Die Leiterelemente können durch Formleiter ausgebildet sein. Innerhalb des Innenabschnitts liegende Abschnitte der Formleiter können radial geschichtet in der Nut angeordnet sein. Vorzugsweise sind wenigstens vier, bevorzugt wenigstens sechs, besonders bevorzugt wenigstens acht Formleiter innerhalb der Nut angeordnet. Es können außerdem höchstens 20, bevorzugt höchstens 16, besonders bevorzugt höchstens zwölf Formleiter in der Nut angeordnet sein. Die Formleiter weisen insbesondere eine rechteckige oder abgerundet rechteckige Querschnittsfläche auf.

Ein jeweiliger Formleiter kann einen Kopfabschnitt und zwei in unterschiedlichen Nuten angeordnete Beinabschnitte aufweisen, die an der Stirnseite elektrisch leitfähig durch den Kopfabschnitt miteinander verbunden sind. An der weiteren Stirnseite kann ein jeweiliger Beinabschnitt des Formleiters mit dem Beinabschnitt eines anderen Formleiters stoffschlüssig, insbesondere mittels einer Schweißverbindung, elektrisch leitfähig verbunden sein. Vorzugsweise ist jeder Formleiter aus einem mehrfach gebogenen Metallstab gebildet. Vorzugsweise sind die Beinabschnitte und der Kopfabschnitt einstückig ausgebildet.

Alternativ können die Leiterelemente eine Runddrahtwicklung ausbilden.

Die der Erfindung zugrunde liegende Aufgabe wird ferner gelöst durch ein Verfahren zur Herstellung eines Stators für eine elektrische Maschine, aufweisend folgende Schritte: Bereitstellen eines Statorkerns, welcher eine Längsachse, eine Stirnseite, eine der Stirnseite gegenüberliegende weitere Stirnseite und eine Nut aufweist, die sich von der Stirnseite zur weiteren Stirnseite erstreckt und einen Rand aufweist; und Anordnen eines Nutabschlusses und einer Wicklungsanordnung im Statorkern derart, dass der Nutabschluss zwischen einem Innenabschnitt, entlang dessen sich die Wicklungsanordnung innerhalb der Nut erstreckt, und dem Rand angeordnet und adhäsiv am Innenabschnitt befestigt ist.

Vorzugsweise ist bei dem erfindungsgemäßen Verfahren vorgesehen, dass die Wicklungsanordnung elektrisch leitfähige Leiterelemente, die derart angeordnet werden, dass sie sich innerhalb des Innenabschnitts von der Stirnseite zur weiteren Stirnseite durch die Nut erstrecken, und eine elektrisch isolierende Nutauskleidung, die derart angeordnet wird, dass sie sich innerhalb des Innenabschnitts von der Stirnseite zur weiteren Stirnseite erstreckt und innerhalb des Innenabschnitts die Leiterelemente einhüllt, aufweist.

Außerdem kann das Anordnen des Nutabschlusses und der Wicklungsanordnung folgende Schritte umfassen: Bereitstellen eines aufgerollten Materials für die Nutauskleidung; Abrollen des Materials; adhäsives Befestigen des Nutabschlusses auf dem Material während des Abrollens; Abtrennen und Falten des mit dem Nutabschluss versehenen Materials zur Ausbildung der Nutauskleidung. So kann das Ausbilden des Nutabschlusses in den Prozess der Herstellung der Nutauskleidung integriert werden.

Gemäß einer ersten Alternative kann vorgesehen sein, dass das Anordnen des Nutabschlusses und der Wicklungsanordnung folgende Schritte umfasst: Anordnen der mit dem Nutabschluss versehenen Nutauskleidung in der Nut und anschließendes Anordnen der Leiterelemente innerhalb der Nutauskleidung. Gemäß einer zweiten Alternative kann vorgesehen sein, dass das Anordnen des Nutabschlusses und der Wicklungsanordnung folgende Schritte umfasst: Anordnen der Leiterelemente in der mit dem Nutabschluss versehenen Nutauskleidung außerhalb des Statorkerns und anschließendes gemeinsames Anordnen der Leiterelemente und der Nutauskleidung in der Nut.

Es ist bei dem erfindungsgemäßen Verfahren zudem möglich, dass während der Nutabschluss in der Nut angeordnet wird, ein die Gleitreibung zwischen dem Rand und dem Nutabschluss reduzierendes Element zwischen dem Rand und dem Nutabschluss vorgesehen ist, wobei das Element nach dem Anordnen des Nutabschlusses und der Wicklungsanordnung entfernt wird.

Die der Erfindung zugrundeliegende Aufgabe wird ferner gelöst durch eine elektrische Maschine, aufweisend einen erfindungsgemäßen Stator oder einen durch ein erfindungsgemäßes Verfahren erhaltenen Stator, wobei die elektrische Maschine ferner einen drehbar bezüglich des Stators gelagerten Rotor aufweist.

Die elektrische Maschine ist vorzugsweise eine Synchronmaschine oder eine Asynchronmaschine. Der Rotor ist vorzugsweise fremderregt oder permanenterregt.

Die der Erfindung zugrundeliegende Aufgabe wird ferner gelöst durch ein Fahrzeug, aufweisend eine erfindungsgemäße elektrische Maschine, die zum Antreiben des Fahrzeugs eingerichtet ist. Das Fahrzeug kann ein batterieelektrisches Fahrzeug oder ein Hybridfahrzeug sein.

Sämtliche Ausführungen zum erfindungsgemäßen Stator lassen sich analog auf das erfindungsgemäße Verfahren, die erfindungsgemäße elektrische Maschine und das erfindungsgemäße Fahrzeug übertragen, sodass auch mit diesen die zuvor genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine perspektivische Ansicht eines Ausführungsbeispiels des erfindungsgemäßen Stators;
- Fig. 2: eine geschnittene Detailansicht einer Nut des in Fig. 1 gezeigten Stators;
- Fig. 3: ein Flussdiagramm eines ersten Ausführungsbeispiels des erfindungsgemäßen Verfahrens;
- Fig. 4: ein Ausschnitt eines Flussdiagramms gemäß einem zweiten Ausführungsbeispiel des erfindungsgemäßen Verfahrens; und
- Fig. 5: eine Prinzipskizze eines Ausführungsbeispiels des erfindungsgemäßen Fahrzeugs mit einem Ausführungsbeispiel der erfindungsgemäßen elektrischen Maschine.

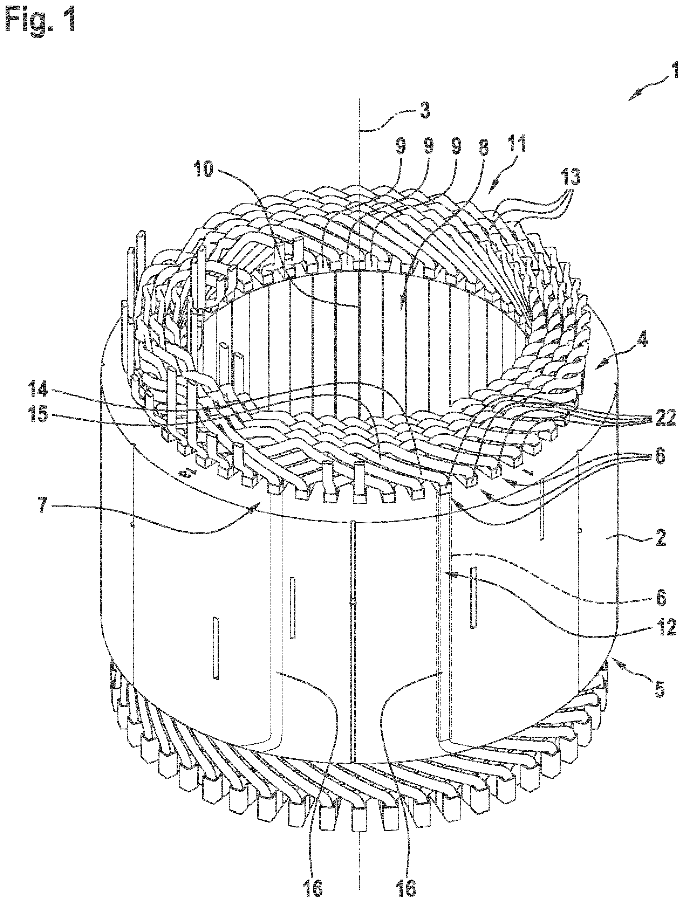

Fig. 1 ist eine perspektivische Ansicht eines Ausführungsbeispiels eines Stators 1.

Der Stator 1 weist einen Statorkern 2 auf, welcher eine Längsachse 3, eine Stirnseite 4 und eine der Stirnseite 4 gegenüberliegende weitere Stirnseite 5 aufweist. Nuten 6 des Statorkerns 1, von denen in Fig. 1 aus Gründen der Übersichtlichkeit nur eine schematisch dargestellt ist, erstrecken sich von der Stirnseite 4 zur weiteren Stirnseite 5.

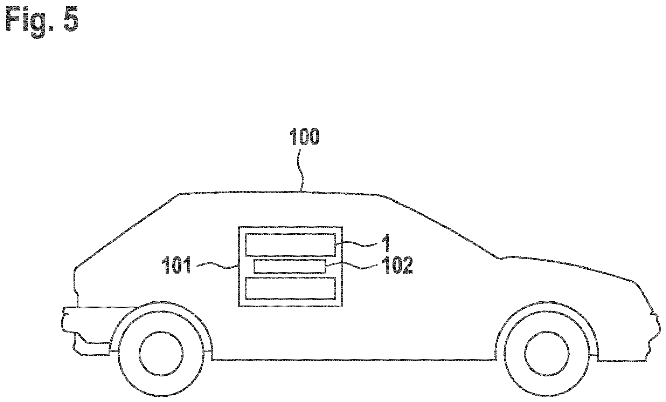

Im vorliegenden Ausführungsbeispiel ist der Statorkern 2 aus einer Vielzahl von in axialer Richtung geschichteten und gegeneinander elektrisch isolierten Einzelblechen (nicht gezeigt) ausgebildet. Der Statorkern 2 weist ferner ein Joch 7 auf, welches die Nuten 6 an einer radialen Seite begrenzt. Der Statorkern 2 begrenzt darüber hinaus einen Aufnahmebereich 8 für einen Rotor (vgl. Fig. 5). Der Aufnahmebereich 8 befindet sich auf der dem Joch 7 gegenüberliegenden Seite des Statorkerns 2. Zu sehen sind ferner mehrere Zähne 9 des Statorkerns 2. Zwischen einem jeweiligen Paar der Zähne 9 ist eine der Nuten 6 ausgebildet, die durch eine Nutöffnung 10 mit dem Aufnahmebereich 8 verbunden ist.

Daneben weist der Stator 1 eine Wicklungsanordnung 11 mit Innenabschnitten 12 auf, die innerhalb der Nuten 6 angeordnet. Die Wicklungsanordnung 11 weist eine Vielzahl elektrisch leitfähiger Leiterelemente 13 auf, die sich innerhalb der Innenabschnitte 12 von der Stirnseite 4 zur weiteren Stirnseite 5 durch die Nuten 6 erstrecken.

Im vorliegenden Ausführungsbeispiel bilden die Leiterelemente 13 exemplarisch eine Haarnadelwicklung aus. Die Leiterelemente 13 sind dabei durch Formleiter 14, von denen in Fig. 1 lediglich einer schematisch dargestellt ist, ausgebildet. Ein jeweiliger Formleiter 14 weist einen Kopfabschnitt 15 und zwei Beinabschnitte 16 auf, die an der Stirnseite 4 elektrisch leitfähig durch den Kopfabschnitt 15 miteinander verbunden sind. An der weiteren Stirnseite 5 ist ein jeweiliger Beinabschnitt 16 mit dem Beinabschnitt 16 eines anderen Formleiters 14 mittels einer Schweißverbindung elektrisch leitfähig verbunden. Jeder Formleiter 14 ist aus einem mehrfach gebogenen Kupferstab gebildet, wobei die Beinabschnitte 16 und der Kopfabschnitt 15 einstückig ausgebildet sind.

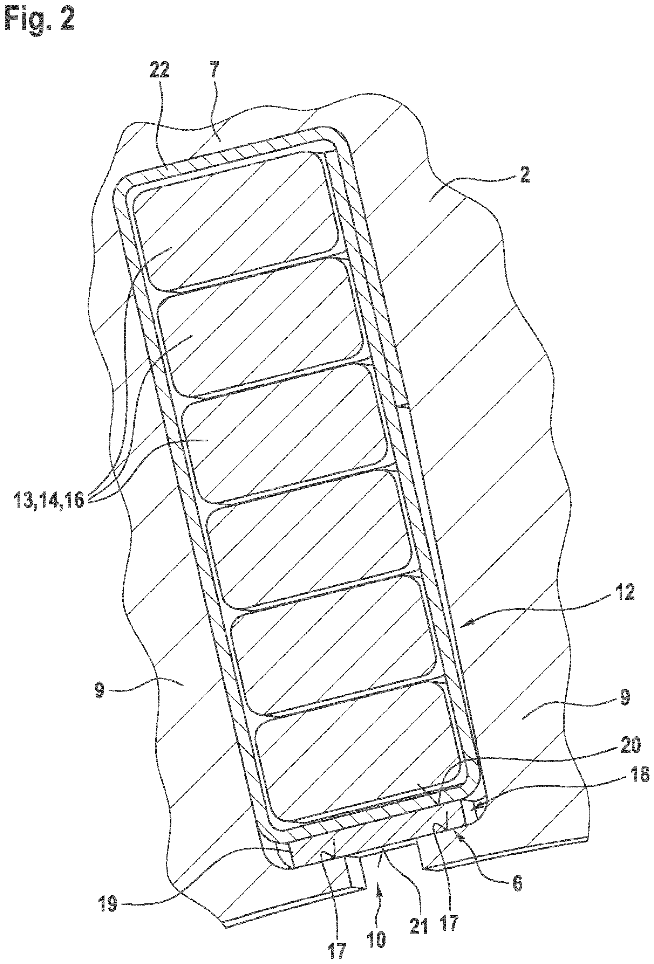

Fig. 2 ist eine geschnittene Detailansicht einer Nut 6 des in Fig. 1 gezeigten Stators 1, deren Darstellung repräsentativ für die übrigen Nuten 6 ist.

In der exemplarischen Ausgestaltung mit einer Haarnadelwicklung sind die Formleiter 16 radial geschichtet und gegeneinander elektrisch isoliert in der Nut 6 angeordnet. Exemplarisch sind hier sechs Formleiter innerhalb der Nut 6 angeordnet.

Die Nut 6 weist in Radialrichtung einen Rand 17 auf. Der Rand 17 liegt dem Joch 7 gegenüber, welches die Nut 6 begrenzt. Exemplarisch liegt der Rand 17 radial innen und das Joch 7 radial außen. Der Stator 1 zeichnet sich durch einen innerhalb der Nut 6 zwischen dem Innenabschnitt 12 der Wicklungsanordnung 11 und dem Rand 17 angeordneten Nutabschluss 18 aus, der adhäsiv am Innenabschnitt 12 befestigt ist.

Der Nutabschluss 18 weist einen Trägerstreifen 19 mit einer ersten Seite 20 und einer zweiten Seite 21 auf. Die erste Seite 20 weist zum Innenabschnitt 12. Auf ihr ist eine adhäsive Schicht angeordnet. Die zweite Seite 21 weist zum Rand 17. Der Trägerstreifen 19 kann durch eine Folie oder einen elastischen Schaum ausgebildet sein. Der Trägerstreifen ist beispielsweise aus einem Kunststoff wie PTFE, Papier oder einem textilen Gewebe ausgebildet. Eine Dicke des Trägerstreifens 18 beträgt zum Beispiel 0,5 mm. Der Nutabschluss 18 weist optional auf seiner dem Rand 17 zugewandten Seite, hier der zweiten Seite 21 des Trägerstreifens 19, eine die Gleitreibung des Trägerstreifens 19 gegenüber dem Statorkern 2 reduzierende Oberflächenschicht (nicht gezeigt) auf.

Die Wicklungsanordnung 11 weist ferner eine elektrisch isolierende Nutauskleidung 22 auf, die sich in der Nut 6 von der Stirnseite 4 zur weiteren Stirnseite 5 erstreckt (vergleiche Fig. 1) und innerhalb des Innenabschnitts 12 die Leiterelemente 13 einhüllt. Die Nutauskleidung 22 ist hier durch ein Isolierpapier, das axial überlappend gefaltet ist, ausgebildet. Der Nutabschluss 18 ist unmittelbar adhäsiv an der Nutauskleidung 22 befestigt.

Gemäß einem weiteren Ausführungsbeispiel weist der Nutabschluss 18 neben dem Trägerstreifen 19 weitere Trägerstreifen (nicht gezeigt) auf. Die Trägerstreifen sind zueinander radial geschichtet angeordnet und adhäsiv aneinander befestigt sind. Dazu ist die erste Seite eines jeweiligen weiteren Trägerstreifens adhäsiv auf der zweiten Seite des radial jochseitig benachbarten Trägerstreifens befestigt. Die die Gleitreibung reduzierende Oberflächenschicht ist dabei auf der zweiten Seite des randseitigen weiteren Trägerstreifens angeordnet.

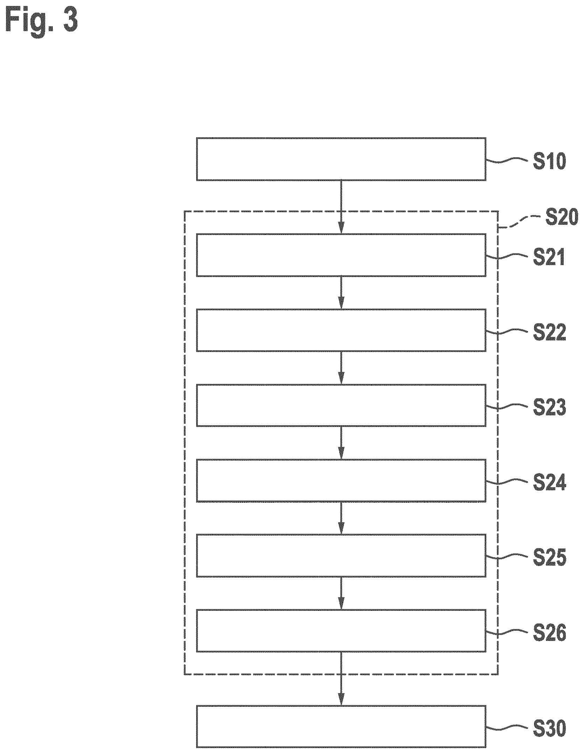

Fig. 3 ist ein Flussdiagramm eines ersten Ausführungsbeispiels eines Verfahrens zur Herstellung eines Stators 1 gemäß einem der zuvor beschriebenen Ausführungsbeispiele.

In einem ersten Schritt S10 wird der Statorkern 2 bereitgestellt. In einem anschließenden Schritt S20 werden der Nutabschluss 18 und die Wicklungsanordnung 11 derart im Statorkern 2 angeordnet, dass der Nutabschluss 18 zwischen dem Innenabschnitt 12 und dem Rand 17 angeordnet und adhäsiv am Innenabschnitt 12 befestigt ist.

Im vorliegenden Ausführungsbeispiel weist der Schritt S20 folgende Schritte S21 bis S26 auf:
Im Schritt S21 wird ein aufgerolltes Material für die Nutauskleidung 22 bereitgestellt. Das Material ist beispielsweise ein mit einem elektrisch isolierenden Harz getränktes Papier und wird als Endlosmaterial bereitgestellt. Im Schritt S22 wird das Material abgerollt. Während des Abrollens wird der Nutabschluss 18 im Schritt S23 adhäsiv auf dem Material befestigt. Anschließend wird das mit dem Nutabschluss 18 versehene Material im Schritt S24 abgetrennt und zur Ausbildung der Nutauskleidung 22 gefaltet. Im anschließenden Schritt S25 wird die mit dem Nutabschluss 18 versehene Nutauskleidung 22 in der Nut 6 angeordnet. Danach werden im Schritt S26 die Leiterelemente 13 innerhalb der Nutauskleidung 22 angeordnet.

Optional ist während des Schritts S25 ein die Gleitreibung zwischen dem Rand 17 und dem Nutabschluss 18 reduzierendes Element zwischen dem Rand und Nutabschluss vorgesehen. Dieses kann dann in einem auf den Schritt S20 folgenden Schritt S30 entfernt werden.

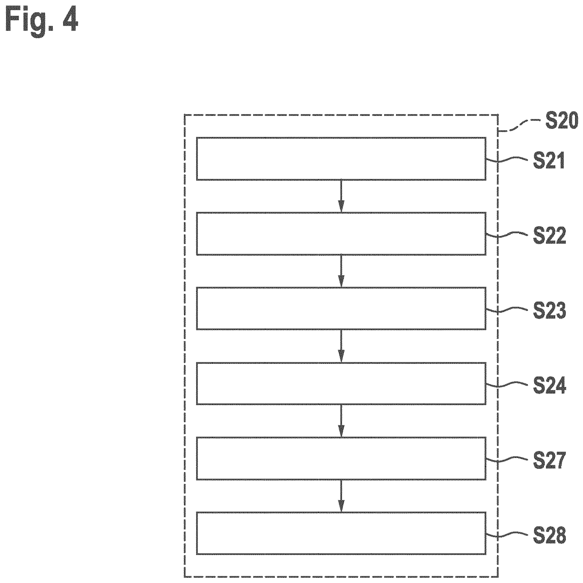

Fig. 4 ist ein Ausschnitt eines Flussdiagramms gemäß einem zweiten Ausführungsbeispiel des Verfahrens. Dieses unterscheidet sich hinsichtlich des Schritts S20 vom ersten Ausführungsbeispiel.

Gemäß dem zweiten Ausführungsbeispiel sind statt den Schritten S25, S26 die Schritte S27, S28 vorgesehen. Im Schritt S27 werden die Leiterelemente 13 außerhalb des Statorkerns 2 in den mit dem Nutabschluss 18 versehenen Nutauskleidungen 22 angeordnet. Im Schritt S28 werden die Leiterelemente 13 gemeinsam mit der Nutauskleidung 22 in den Nuten 6 angeordnet.

Gemäß einem weiteren Ausführungsbeispiel des Stators 1 wird der Nutabschluss 18 unmittelbar auf den Leiterelementen 13 adhäsiv befestigt, wobei auf die Nutauskleidung 22 verzichtet werden kann.

Gemäß einem weiteren Ausführungsbeispiel des Stators 1 bilden die Leiterelemente 13 eine Runddrahtwicklung aus.

Fig. 5 ist eine Prinzipskizze eines Ausführungsbeispiels eines Fahrzeugs 100 mit einem Ausführungsbeispiel einer elektrischen Maschine 101. Die elektrische Maschine umfasst einen Stator 1 gemäß einem der zuvor beschriebenen Ausführungsbeispiele sowie einen drehbar innerhalb des Stators 1 gelagerten Rotor 102. Die elektrische Maschine 101 ist eine permanent- oder fremderregte Synchronmaschine oder eine Asynchronmaschine und zum Antreiben des Fahrzeugs 100 eingerichtet. Dieses kann dementsprechend ein batterieelektrisches Fahrzeug (BEV) oder ein Hybridfahrzeug sein.

## Patentansprüche

1. Stator (1) für eine elektrische Maschine (101), aufweisend
- einen Statorkern (2), welcher eine Längsachse (3), eine Stirnseite (4), eine der Stirnseite (4) gegenüberliegende weitere Stirnseite (5) und eine Nut (6) aufweist, die sich von der Stirnseite (4) zur weiteren Stirnseite (5) erstreckt und in Radialrichtung einen Rand (17) aufweist,
- eine Wicklungsanordnung (11) mit einem Innenabschnitt (12), der innerhalb der Nut (6) angeordnet ist, und
- einen Nutabschluss (18), der innerhalb der Nut (6) zwischen dem Innenabschnitt (12) und dem Rand (17) angeordnet ist,
**dadurch gekennzeichnet, dass**
der Nutabschluss (18) adhäsiv am Innenabschnitt (12) befestigt ist.

2. Stator (1) nach Anspruch 1, wobei
der Nutabschluss (18) einen Trägerstreifen (19) mit einer ersten Seite (20), die zum Innenabschnitt (12) weist und auf der eine adhäsive Schicht angeordnet ist, und einer zum Rand (17) weisenden zweiten Seite (21) aufweist.

3. Stator (1) nach Anspruch 2, wobei
der Nutabschluss (18) einen weiteren Trägerstreifen aufweist, wobei die Trägerstreifen (19) zueinander radial geschichtet angeordnet und adhäsiv aneinander befestigt sind.

4. Stator (1) nach Anspruch 2 oder 3, wobei
der Nutabschluss (18) auf seiner dem Rand (17) zugewandten Seite eine die Gleitreibung des Trägerstreifens (19) gegenüber dem Statorkern (2) reduzierende Oberflächenschicht aufweist.

5. Stator (1) nach einem der vorhergehenden Ansprüche, wobei
die Wicklungsanordnung (11) elektrisch leitfähige Leiterelemente (13) aufweist, die sich innerhalb des Innenabschnitts (12) von der Stirnseite (4) zur weiteren Stirnseite (5) durch die Nut (6) erstrecken.

6. Stator (1) nach Anspruch 5, wobei
die Wicklungsanordnung (11) eine elektrisch isolierende Nutauskleidung (22) aufweist, die sich in der Nut (6) von der Stirnseite (4) zur weiteren Stirnseite (5) erstreckt und innerhalb des Innenabschnitts (12) die Leiterelemente (13) einhüllt.

7. Stator (1) nach Anspruch 6, wobei
der Nutabschluss (18) unmittelbar adhäsiv an der Nutauskleidung (22) befestigt ist.

8. Stator (1) nach einem der Ansprüche 5 bis 7, wobei
die Leiterelemente (13) eine Haarnadelwicklung ausbilden.

9. Verfahren zur Herstellung eines Stators (1) für eine elektrische Maschine (101), folgende Schritte aufweisend:
- Bereitstellen eines Statorkerns (2), welcher eine Längsachse (3), eine Stirnseite (4), eine der Stirnseite (4) gegenüberliegende weitere Stirnseite (5) und eine Nut (6) aufweist, die sich von der Stirnseite (4) zur weiteren Stirnseite (5) erstreckt und einen Rand (17) aufweist; und
- Anordnen eines Nutabschlusses (18) und einer Wicklungsanordnung (11) im Statorkern (2) derart, dass der Nutabschluss (18) zwischen einem Innenabschnitt (12), entlang dessen sich die Wicklungsanordnung (11) innerhalb der Nut (6) erstreckt, und dem Rand (17) angeordnet und adhäsiv am Innenabschnitt (12) befestigt ist.

10. Verfahren nach Anspruch 9, wobei
die Wicklungsanordnung (11) elektrisch leitfähige Leiterelemente (13), die derart angeordnet werden, dass sie sich innerhalb des Innenabschnitts (12) von der Stirnseite (4) zur weiteren Stirnseite (5) durch die Nut (6) erstrecken, und eine elektrisch isolierende Nutauskleidung (22), die derart angeordnet wird, dass sie sich innerhalb des Innenabschnitts (12) von der Stirnseite (4) zur weiteren Stirnseite (5) erstreckt und innerhalb des Innenabschnitts (12) die Leiterelemente (13) einhüllt, aufweist.

11. Verfahren nach Anspruch 10, wobei
das Anordnen des Nutabschlusses (18) und der Wicklungsanordnung (11) folgende Schritte umfasst:
- Bereitstellen eines aufgerollten Materials für die Nutauskleidung (22);
- Abrollen des Materials;
- adhäsives Befestigen des Nutabschlusses (18) auf dem Material während des Abrollens;
- Abtrennen und Falten des mit dem Nutabschluss (18) versehenen Materials zur Ausbildung der Nutauskleidung (22).

12. Verfahren nach Anspruch 10 oder 11, wobei
das Anordnen des Nutabschlusses (18) und der Wicklungsanordnung folgende Schritte umfasst:
- Anordnen der mit dem Nutabschluss (18) versehenen Nutauskleidung (22) in der Nut (6) und anschließendes Anordnen der Leiterelemente (13) innerhalb der Nutauskleidung (22) oder
- Anordnen der Leiterelemente (13) in der mit dem Nutabschluss (18) versehenen Nutauskleidung (22) außerhalb des Statorkerns (2) und anschließendes gemeinsames Anordnen der Leiterelemente (13) und der Nutauskleidung (22) in der Nut (6).

13. Verfahren nach einem der Ansprüche 9 bis 12, wobei
während der Nutabschluss (18) in der Nut (6) angeordnet wird, ein die Gleitreibung zwischen dem Rand (17) und dem Nutabschluss (18) reduzierendes Element zwischen dem Rand (17) und dem Nutabschluss (18) vorgesehen ist, wobei das Element nach dem Anordnen des Nutabschlusses (18) und der Wicklungsanordnung (11) entfernt wird.

14. Elektrische Maschine (101) zum Antreiben eines Fahrzeugs (100), aufweisend einen Stator (1) nach einem der Ansprüche 1 bis 8 oder einen durch ein Verfahren nach einem der Ansprüche 9 bis 13 erhaltenen Stator (1), wobei die elektrische Maschine (101) ferner einen drehbar bezüglich des Stators (1) gelagerten Rotor (102) aufweist.

15. Fahrzeug (100), aufweisend eine elektrische Maschine (101) nach Anspruch 14, die zum Antreiben des Fahrzeugs (100) eingerichtet ist.
